**Europäisches Patentamt**

**European Patent Office**

**Office européen des brevets**

(19)

(11) Veröffentlichungsnummer : **0 103 090
B1**

(12)

# EUROPÄISCHE PATENTSCHRIFT

(45) Veröffentlichungstag der Patentschrift :
15.04.87

(51) Int. Cl.⁴ : **G 01 B   3/22**

(21) Anmeldenummer : **83106435.7**

(22) Anmeldetag : **01.07.83**

(54) **Tastkopf mit Überlastsicherung.**

(30) Priorität : **12.08.82 DE 3229991**

(43) Veröffentlichungstag der Anmeldung :
**21.03.84 Patentblatt 84/12**

(45) Bekanntmachung des Hinweises auf die Patenterteilung : **15.04.87 Patentblatt 87/16**

(84) Benannte Vertragsstaaten :
**AT CH DE FR GB IT LI NL SE**

(56) Entgegenhaltungen :
**DE-A- 1 548 326
DE-C- 1 028 792**

(73) Patentinhaber : **Dr. Johannes Heidenhain GmbH
Nansenstrasse 17
D-8225 Traunreut (DE)**

(72) Erfinder : **Feichtinger, Kurt
Katzwalchen Nr. 26
D-8221 Palling (DE)**

EP 0 103 090 B1

## Beschreibung

Die Erfindung bezieht sich auf eine Aufnahmevorrichtung für einen Tastkopf nach dem Oberbegriff des Anspruches 1.

Es sind mechanische Null-Tasteinrichtungen für Werkzeugmaschinen (DE-A-15 48 326) und Taster für Meß- und Prüfgeräte (DE-C-10 28 792) bekannt, die mit einer federbeaufschlagten Überlastsicherung versehen sind, wobei in der DE-A-15 48 326 eine Hinterschneidung in der Halterung vorgesehen ist, die mit einem federndem Ring ein Gegenstück fixiert. Bei der DE-C-10 28 792 weist das Tastglied an seinem gefesselten Ende einen halbkugelförmigen Ansatz auf, der in einer zylindrischen Aussparung eines Trägers plaziert ist. Mit Hilfe einer Zugfeder werden die plane Grundfläche des halbkugelförmigen Ansatzes und die Grundfläche der zylindrischen Aussparung flächig in Kontakt gebracht.

Ferner findet sich in der genannten Druckschrift ein Hinweis auf den Stand der Technik, aus dem eine zentrierende Lagerung mit Hilfe von mindestens drei Kugeln bekannt ist.

Ferner sind Tastköpfe für Mehrkoordinatenmeß- oder Bearbeitungsmaschinen bekannt, bei denen die Auslenkung des Taststiftes bei Werkstückberührung ein elektrisches Signal auslöst z. B. (DE-B-19 32 010 und GB-C-1 599 758). Die Taststifte der letztgenannten Tastköpfe nehmen in der Ruhelage selbsttätig eine äußerst exakt definierte Nullposition ein, die nach Auslenkung bis auf 1 μm reproduzierbar sein muß, da die verschiedenen Meßvorgänge im allgemeinen numerisch gesteuert, also automatisch ablaufen. Eine Justierung des Taststiftes ist bei derartigen Tastköpfen also nicht vorgesehen.

Derartige Tastköpfe sind teuer, so daß entsprechend hohe Kosten entstehen, wenn durch Überschreiten der maximal zulässigen Auslenkung des Taststiftes der Tastkopf beschädigt wird.

Aufgabe der Erfindung ist es, einen Tastkopf mit einer als Überlastsicherung ausgebildeten Aufnahmevorrichtung zu schaffen, die eine exakt definierte Aufnahme des Tastkopfgehäuses ermöglicht, einfach und kostengünstig herstellbar ist und den Tastkopf bei unsachgemäßer Beanspruchung vor Beschädigung schützt.

Diese Aufgabe wird durch die Merkmale des Patentanspruches 1 gelöst.

Die Vorteile des erfindungsgemäßen Tastkopfes liegen darin, daß dessen Aufnahmevorrichtung lediglich aus zwei leicht herstellbaren Bauteilen besteht, die durch handelsübliche Bauelemente wie Federringe und Kugeln miteinander verbunden werden, und daß nach der einfachen Montage dieser Teile keine aufwendige Nachjustierung erfolgen muß.

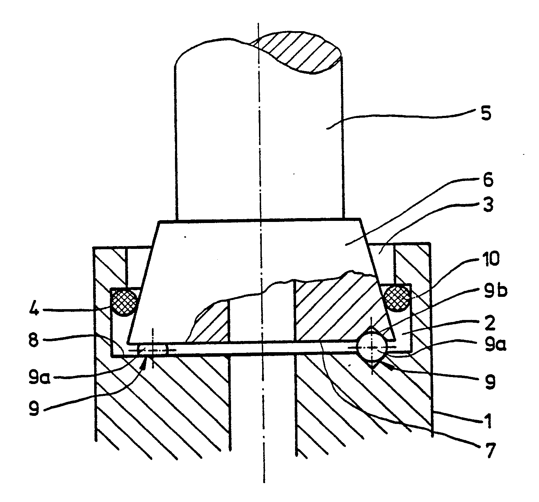

Anhand der Zeichnung soll mit Hilfe eines Ausführungsbeispiels die Erfindung noch näher erläutert werden.

Der zu einer nicht dargestellten Spindel einer Meß- oder Bearbeitungsmaschine weisende obere Bereich eines Tastkopfgehäuses 1 weist eine Aussparung 2 auf. Diese Aussparung 2 enthält eine Öffnung 3, die zur genannten Spindel ausgerichtet ist. Die Öffnung 3 ist im Durchmesser kleiner als die Aussparung 2, so daß eine Hinterschneidung 4 entsteht. Ein Aufnahmedorn 5, der in bekannter Weise in die nicht dargestellte Spindel einsetzbar ist, trägt einen kegelstumpfförmigen Ansatz 6. Die Basis 7 des Kegelstumpfes 6 weist drei gleichmäßig über den Umfang verteilte Präzisionslagerstellen 9 in Form von negativen Pyramidenspitzen 9b auf.

Die Grundfläche 8 der Aussparung 2 weist ebenfalls drei gleichmäßig über den Umfang verteilte Präzisionslagerstellen in Form von negativen Pyramidenspitzen 9b auf. Die jeweils im Winkel von 120° zueinander versetzten Präzisionslagerstellen 9b der Kegelstumpfbasis 7 und der Aussparungsgrundfläche 8 liegen sich also exakt gegenüber, wenn das Tastkopfgehäuse 1 zentrisch zum Aufnahmedorn 5 plaziert ist. Drei handelsübliche Präzisionskugeln 9a bewirken — zwischen den unteren und oberen Präzisionslagerstellen 9b liegend — die exakt parallele Lage der Grundfläche 8 zur Kegelstumpfbasis 7. Durch diese Lagerung ist eine exakt reproduzierbare Positionierung des Tastkopfgehäuses 1 zum Aufnahmedorn 5 und damit zur Maschinenspindel gewährleistet.

Durch einen Federring 10, der auf der Mantelfläche des Kegelstumpfes 6 aufliegt und die Hinterschneidung 4 untergreift, wird der Kraftschluß zwischen dem Tastkopfgehäuse 1 und dem Aufnahmedorn 5 hergestellt.

Bei unsachgemäßer Auslenkung des nicht gezeigten Taststiftes des Tastkopfes wird das Tastkopfgehäuse 1 gegen die Wirkung des Federringes 10 von dem Aufnahmedorn 5 abgesprengt.

Die Montage des Tastkopfgehäuses 1 erfolgt in leicht ersichtlicher Weise durch Einlegen der Kugeln 9a in die Präzisionslagerstellen 9b der Aussparung 2, durch anschließendes Einführen des Ansatzes 6 in die Aussparung 2 und darauf folgendem Einsetzen des Federringes 10. Damit ist die exakte Ausgangsstellung wieder hergestellt.

Das federnde Element kann auch als elastischer, sogenannter O-Ring ausgebildet werden.

Die Präzisionslager sind auch in anderer Bauform, beispielsweise als V-Lager oder als Lager mit drei Kugeln, in deren Mitte dann die Lagerkugel plaziert wird, vorstellbar.

## Patentansprüche

1. Aufnahmevorrichtung für einen Tastkopf in einer Spindel einer Mehrkoordinatenmeß- oder Bearbeitungsmaschine, bei der im Tastkopfgehäuse eine spindelseitige Aussparung mit einer Hinterschneidung zur Aufnahme eines Aufnahmedornes vorgesehen ist, die mittels federnder Elemente kraftschlüssig miteinander verbunden sind, dadurch gekennzeichnet, daß der spindelseitige Aufnahmedorn (5) zur Halterung des Tastkopfgehäuses (1) einen kegelstumpfförmigen Ansatz (6) trägt, der sich zu seinem die Basis (7) des Kegelstumpfes bildenden freien Ende hin erweitert, wobei die erweiterte Basis (7) in die Hinterschneidung (4) eingreift, und sich in an sich bekannter Weise über wenigstens drei gleichmäßig über den Umfang verteilte Präzisionslager (9) an der Grundfläche (8) der Aussparung (2) abstützt, wobei das Tastkopfgehäuse (1) mittels eines federnden Elementes (10), das zwischen dem Kegelstumpfmantel und der Hinterschneidung (4) plaziert ist, in der Aussparung (2) kraftschlüssig gehalten ist.

2. Tastkopf nach Anspruch 1, dadurch gekennzeichnet, daß die Präzisionslager (9) von in einer Ebene angeordneten Kugeln (9a) gebildet werden, die jeweils in Präzisionslagern in Form von negativen Pyramidenspitzen (9b) gelagert sind.

## Claims

1. Receiving device for a feeler head in a spindle of a multi-coordinate measuring machine or processing machine, in which a spindle-side recess having an undercut for receiving an arbor is provided in the feeler head housing, the arbor and the feeler head housing being connected to one another in a non-positive manner by means of elastic elements, characterized in that the spindle-side arbor (5) for holding the feeler head housing (1) bears a truncated-cone-shaped extension (6) which widens towards its free end forming the base (7) of the truncated cone, with the widened base (7) engaging into the undercut (4) and being supported at the base surface (8) of the recess (2) in a way known *per se via* at least three precision bearings (9) distributed uniformly over the periphery, with the feeler head housing (1) being held in a non-positive manner in the recess (2) by means of an elastic element (10) which is placed between the truncated-cone circumference and the undercut (4).

2. Feeler head according to Claim 1, characterized in that the precision bearings (9) are formed by balls (9a) which are arranged in a plane and are in each case mounted in precision bearings in the form of negative pyramidal points (9b).

## Revendications

1. Dispositif pour recevoir un palpeur dans une broche d'une machine d'usinage ou de mesure à plusieurs axes, dans lequel il est prévu, dans l'enveloppe du palpeur, un évidement situé du côté broche et doté d'une contre-dépouille, pour recevoir un mandrin de réception, cette enveloppe et ce mandrin étant mutuellement liés par serrage au moyen d'éléments élastiques, caractérisé en ce que le mandrin de réception (5) situé côté broche porte, pour retenir l'enveloppe (1) du palpeur, un embout (6) en forme de tronc de cône, lequel s'élargit vers son extrémité libre formant la base (7) du tronc de cône, cette base élargie (7) s'engageant dans la contre-dépouille (7) et s'appuyant de manière connue, par l'intermédiaire d'au moins trois portées de précision (9) régulièrement réparties sur le pourtour, sur la surface de base (8) de l'évidement (2), l'enveloppe (1) du palpeur étant maintenue dans l'évidement (2) par l'effet de serrage au moyen d'un élément élastique (10) qui est placé entre la surface périphérique du tronc de cône et la contre-dépouille (4).

2. Dispositif selon la revendication 1, caractérisé en ce que les portées de précision (9) sont constituées par des billes (9a) agencées dans un plan et supportées dans des portées de précision ayant la forme de pointes de pyramide (9b) négatives.